# EUROPEAN PATENT APPLICATION

(11) **EP 0 600 556 A1**
(43) Date of publication of application: **08.06.1994**
(21) Application number: 93203336.8
(22) Date of filing: 29.11.1993
(51) Int. Cl.: G06K 19/07, G06K 7/12, H04L 1/00, H04L 7/00, G06K 7/00

(54) **Identification system with improved identification algorithm**

(30) Priority: 30.11.1992 NL 9202069
(71) Applicant: N.V. Nederlandsche Apparatenfabriek NEDAP, NL-7141 DE Groenlo (NL)
(72) Inventor: Kip, Harm Jacob, NL-7131 VW Lichtenvoorde (NL); Fockens, Tallienco Wieand Harm, NL-7152 GV Eibergen (NL)
(74) Representative: Smulders, Theodorus A.H.J., Ir.

(57) **Abstract**

An electromagnetic identification system comprising a transceiver which, in operation, generates an interrogation field, and at least one label capable of being activated by means of the interrogation field so as to continuously generate a binary code signal serving at least for identification and having a predetermined length, capable of being detected by the transceiver by means of a detection algorithm. This system is characterized in that the transceiver is provided with a decoder capable of recognizing, within a correctly received bit sequence of the same length as a code signal of a label, a successive series of bits of a predetermined length and composition, serving as synchronization bits, independently of the position of the synchronization bits within the received bit sequence, and of decoding the code signal starting from the position of the synchronization bits.

## Description

The invention relates to a radio-frequency identification system comprising one or more labels capable of being read remotely by a reading device (a so-called transceiver) belonging to the system, which for that purpose, during operation, transmits a R(adio)F(requent) interrogation signal, while a data signal serving at least for identification is sent back to the transceiver by a label which receives the interrogation signal. Such radio-frequency identification systems are for instance disclosed in applicant's patent application NL 9201116. The invention further relates to a method for detecting the code of an identification label of such an identification system.

In identification systems, an identification label will, as soon as it is within the range of the interrogation signal (i.e., in the interrogation field of the transceiver) repetitively transmit the code word programmed in the label. The code word, also referred to as "the code", "the data word" or "the data signal", consists of a bit sequence, for instance a sequence having a number of 100 bits. Normally, this bit sequence is subdivided into a plurality of functional groups, for instance a group of synchronization bits, marking the beginning of a data word, a second group of bits, containing the identification number of the label, and a group of error detection bits, added in order to enable verification, after reception by the receiver, whether the entire code word has been received without transmission errors, and hence the correct identification number has been transferred.

In the identification systems as referred to hereinabove, the code word is transmitted repetitively in such a manner that the final bit of the code word in a first cycle seamlessly connects to the first bit of the code word in the next cycle.

In the identification system according to the prior art, the receiver which receives a code word will first search for the synchronization bits. Starting from the synchronization bits, the exact times of the other bits in the received flow of bits can subsequently be determined. Subsequently, the other bits with the identification number and the error detection bits can then be recognized. Finally, the receiver will determine on the basis of the error detection bits whether the identification number has been received faultlessly.

If the receiver establishes that the code word has not come in faultlessly, the receiver will again attempt to decipher the code word faultlessly in the next cycle of the data word. If the receiver fails to do so again, it may be attempted again in a third or fourth cycle to decipher the code word faultlessly, etc., just as long as the label is within the interrogation field and transmits the code word.

This manner of decoding a received bit sequence, which is for instance described in EP-A-0073644, FR-A-2591834, US-A-3589624 and US-A-3689885, has as a consequence that the first moment when it can be established that an identification number has been received faultlessly is the moment when the data word has been received completely, from the first bit through the final bit, for the first time. If it is assumed that the data word consists of N bits and the transmission thereof takes T seconds, and that a label starts transmitting the first bit of the code word at time t = 0, the first moment when the label can be identified is the time t1 = T seconds.

If no identification took place at time t1, the code word should be received all over again, so that after another T seconds, hence at the time t2 = 2T seconds, the possibility of identification taking place is again present. If no identification takes place at t2, identification is not possible until t3 = 3T seconds, etc.

Therefore, in the known identification systems the positive recognition of an identification label is only possible after a predetermined minimum time interval T and subsequently at predetermined times lying after the end of the first time interval T by a whole multiple of the length of the time interval T. As a result, the recognition of a specific label may take up a relatively large amount of time, which is problematic in practice.

The object of the invention is to overcome the drawback outlined and more in particular to provide an efficient, fast and reliably operating identification system and an efficient, fast and reliable method for operating such an identification system.

To that end, according to the invention, an identification system of the type described hereinabove is characterized in that the transceiver is provided with a decoder capable of recognizing, within a correctly received bit sequence of the same length as a code signal of a label, a successive series of bits of a predetermined length and composition, serving as synchronization bits, independently of the position of the synchronization bits within the received bit sequence, and of decoding the code signal starting from the position of the synchronization bits.

In accordance with the invention, a method for detecting the code of a wirelessly operating identification system is characterized in that a bit sequence detected by the transceiver is registered directly from the first bit, independently of the nature of the first bits, and that a detection algorithm is used capable of recognizing synchronization bits within a bit sequence of a predetermined length of N bits corresponding to the length of a code signal of a label, and of determining the position thereof in the bit sequence, and which determines the position of the other bits in the code signal, starting from the position of the synchronization bits.

The invention will be explained in more detail hereinafter, with reference to the accompanying drawings. In these drawings:
Fig. 1 schematically shows an example of an identification system according to the invention;
Fig. 2 schematically shows an example of a binary code word;
Fig. 3 schematically illustrates how code words are successively transmitted by a label of an identification system of the type to which the invention relates;
Fig. 4 shows a diagram of the identification probability, plotted against the time of a known identification system;
Fig. 5 schematically illustrates the identification method according to the invention; and
Fig. 6 illustrates a diagram of the identification probability, plotted against the time of an identification system according to the invention.

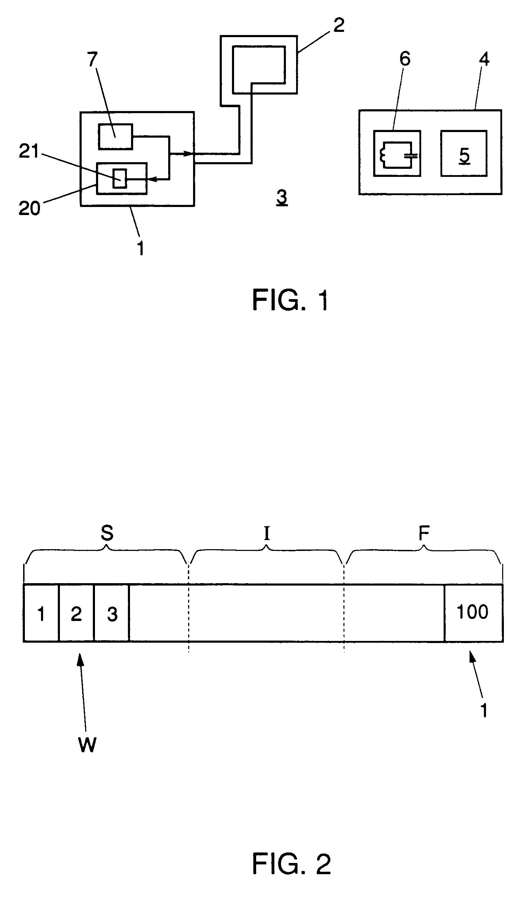

Fig. 1 schematically shows an example of an identification system according to the invention, comprising a reading device 1, also referred to as transceiver (transmitter/receiver) or interrogation unit. The reading device is provided with an antenna device 2 capable of comprising one or more loop antennas, by means of which, during operation, an electromagnetic interrogation field is generated in an interrogation zone 3. Typically, the interrogation field or interrogation signal is substantially an alternating magnetic field having a frequency in the RF range. The identification system further comprises one or more labels, also referred to as responders, code carriers or tags, capable of generating a code signal in response to an interrogation signal generated by a reading device, which code signal identifies the label in question or the group to which the label belongs. The labels contain a suitable electronic circuit 5, and means 6 for receiving the interrogation signal and means for generating a code signal. Preferably, the labels are passive, i.e., the labels have no battery of their own but withdraw the energy required for the operation of the electronic circuit from the interrogation field. An example of such a label is described in applicant's Dutch patent 176404.

If a label is located in a suitable interrogation field, i.e., an interrogation field of such a frequency that the label responds thereto, the label generates a code signal consisting of a binary code word capable of being detected by the transceiver 1 in one of the manners known for that purpose (absorption technique or transmission technique).

Such a code signal or code word consists of a bit sequence of a predetermined length and arrangement. By way of example, Fig. 2 shows a code word W consisting of 100 bits. Normally, the bit sequence is subdivided into a number of groups succeeding each other in a fixed order. In this example, three groups, S, I and F are shown.

The group S comprises synchronization bits indicating the beginning of a code word or data word. The group I forms the actual identification signal, while the group F forms a group of error detection bits.

Other groups, such as for instance a group of information bits, may also be part of a code word.

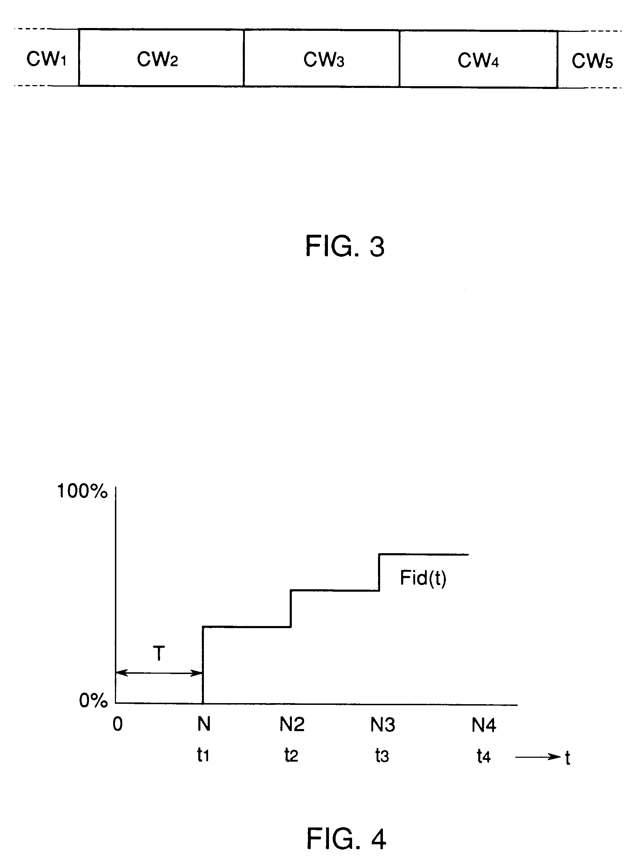

As soon as a label is located in an interrogation field and is capable of withdrawing sufficient supply energy from the field, the code word of the label is generated. The code word is repeated as long as the label is located in the interrogation field. The successive code words are directly connected to each other, as shown schematically in Fig. 3.

Fig. 3 shows five successive, identical code words CW₁ through CW₅.

If a label, coming within the range of an interrogation field, starts generating the first bit of the code word (which need not necessarily be the case), and if the code word consists of N bits, a complete code word is generated after N bits. At that moment, the code word can be recognized for the first time. In accordance with the known technique, if no identification proves to be possible due to one or more bits having been transferred incorrectly, a second attempt to identify the label in question can only be made after another N bits.

In order to determine whether a code word has been transferred correctly or incorrectly, error verification means may be provided. Various known error verification methods can be used, such as, for instance, the parity bit method and the checksum method.

The probability of identification taking place after T seconds is determined by the probability p_bit that a bit is detected properly, and the length N of the code word. After all, it is requisite for all N bits of the code word to have been received properly. Conventionally, in the literature, the bit error rate (BER) is calculated with, i.e., the probability that a bit is disturbed. Consequently, it applies that p_bit = 1 - BER. Hence, the probability that a complete code word is received faultlessly is p_word = (1 - BER)^{N}.

Fig. 4 shows a diagram in which the time t is plotted horizontally. The time corresponds to the number of bits received and hence also to the number of code words N received. The cumulative identification probability F_id(t) is shown vertically. F_id(t) = 0 as long as not all bits have been received, hence t < t1. In the period t1<t<t2, the code word has been received completely only once, and hence the probability of being identified F_id(t) equals the probability that the code word has been received correctly, equals p_word = (1 - BER)^{N}. In the period t2<t<t3, the code word has twice been received completely. The probability that the code word has been received correctly during the second time also equals p_word. In order to calculate the cumulative probability of identification in the period t2 to t3, it is necessary to calculate the probability of receiving the code word incorrectly in period t1 to t2, and that probability in period t2 - t3. In both periods, the probability of non-identification is 1 - p_word. Accordingly, from time t3 onwards, the probability of incorrect reception in the first period 0-t1 and of incorrect reception in the second period t1-t2 are together (1 - p_word)². For instance, if BER = 0.001, p_bit = 0.999, and p_word = (0.999)^{N} = 0.90 for N = 100. Consequently, if the code word has been transmitted and received once, the cumulative probability of identification p_word is 0.90. After the code word has been transmitted twice, this probability is 1 - (1 - 0.90)² = 1 - 0.01 = 0.99. If BER is greater than 0.001, these cumulative probabilities decrease very fast.

Consequently, a substantial drawback of this existing technique is that already in the case of a relatively small probability of a bit error (BER), it is probable that the code word will have to be transmitted again several times before a correct decoding and identification can take place. An even more substantial drawback of the existing technique is that if the code word is missed once, one has to wait for another T seconds for a new possibility of identification to occur. As this new identification possibility is only formed by the reception of the N new bits, the received information of the previous N bits is completely lost. This clearly shows that this manner of decoding the repeating code word cannot be optimal from an information-theoretical viewpoint. In particular at the beginning of the transmission of the data word by the label, when the label has just been brought into the interrogation field, the coupling with the receiver is still poor, so that there is a relatively substantial probability that the first bits are not received correctly and hence the first bit cycle (the code word) is useless.

The object of the invention is to reduce or remove the drawbacks mentioned hereinabove. To that end, a decoding algorithm is used in the receiver, enabling the receiver to decode a data word of N bits correctly from a row of N received bits which starts with a random bit number n of the dataword and ends with bit number n+N-1 (in the above example, wherein N = 100, this is n+99) and all other N-2 bits in between.

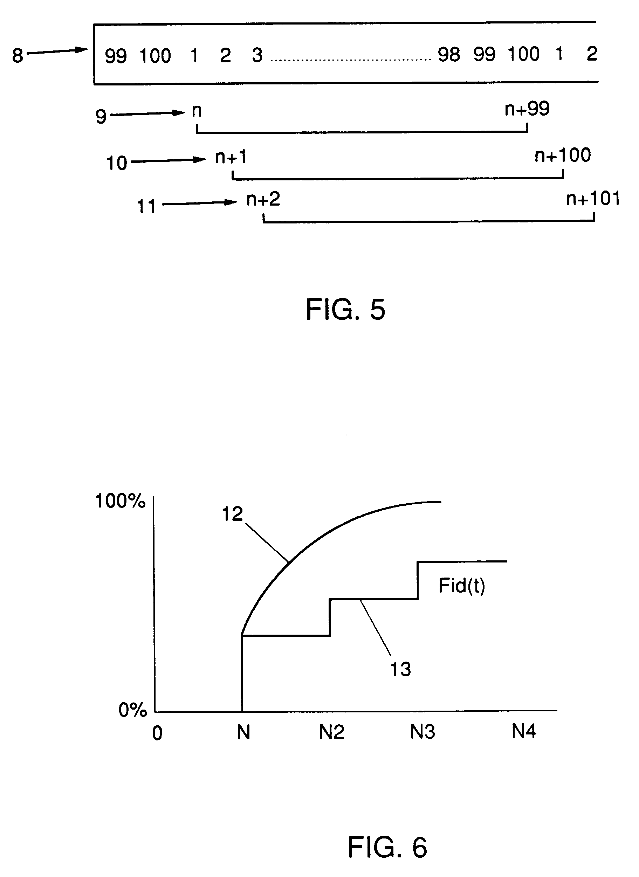

This is illustrated in Fig. 5. Fig. 5 shows a bit sequence at 8. The sequence shown comprises the last two bits of a code word (bits numbers 99 and 100), subsequently a complete code word (bits numbers 1-100) and, finally, the two first bits (bits numbers 1 and 2) of a next code word.

At 9, 10 and 11, Fig. 5 shows a sequence of 100 bits, containing a complete code word in the case where N = 100, but in which the code word does not always begin with the usual first bit. Bit number n may be any random bit number. Hence, if n = 10, the bit sequence 9 begins with bit number 10 and ends with bit number 109. Accordingly, the first bits of the code word are located at the end of the received bit sequence. The transceiver 1 comprises a transmission section 7 and a detection section 20. The detection section 20 comprises a decoder 21, operating according to such a decoding algorithm that a code word or data word that does not begin with the usual starting bits but that does contain N successive bits, can be recognized as well. For this purpose, the decoder may also comprise, in addition to a device for recognizing a specific bit sequence forming the synchronization bits, a search device, which, for instance, determines the position of the identification bits, starting from the position of the synchronization bit sequence. For recognizing the synchronization bits and for searching the other information bits, starting from the position of the synchronization bits, a suitable (micro)processor may be used, which in fact forms the decoder. It is also possible to use a special circuit capable of recognizing a bit sequence of a predetermined length and composition. For this purpose, two shift registers (or shift register sections) may for instance be used. One shift register may then contain the synchronization bit sequence and the second shift register receives the incoming bit sequence. After each received bit, the sequence in the second shift register shifts one position. The total number of positions in the second shift register is equal to the number of synchronization bits. After each received bit, the contents of the second shift register are compared with the contents of the first shift register. If the two shift registers have the same contents at all positions, the synchronization bit sequence is thereby detected. As a result, it is no longer necessary that the receiver recognizes the synchronization bits first. It is possible to directly start reading a row of bits, beginning at any moment, until all N bits have been received, whereupon identification follows, i.e., if these bits have been received and/or decoded faultlessly. If this row of bits has not been decoded faultlessly, the next row of N bits can be processed, presenting a new possibility of identification.

Also in this solution, after the reception of N bits there is always a moment when the code word can be decoded; however, the row of bits need not begin with the first bit of the code word. This means that even in the situation wherein a label has just been brought into the interrogation field, but wherein the bits that were transmitted first may not have been received, or may have been received while distorted by noise, not the whole first cycle of the code word is lost. In the receiver, the reading cycles begin at the moment when the first detectable bits are received. This moment coincides with t = 0 in the identification probability distribution of Fig. 4. This probability distribution further has the same form and values as in the existing technique.

Now that it is possible to decode the code word from each row of N bits and to recover the identification number, it is also possible, in accordance with a further elaboration of the invention, to carry out the decading process more frequently than once per N received bits. In the extreme, it is even possible to attempt to decode the last N received bits each time after receiving a bit. Reference is again made to Fig. 5. In Fig. 5, a group of bits 9 is shown, beginning with bit number n from t = 0, the time when the receiver received bits for the first time, and ending with bit n + 99. If after an attempt to decode this bit sequence, in which an algorithm first searches the synchronization and subsequently examines the identification number bits and the error detection bits in an identification algorithm, it appears that one or more bits must be incorrect in this group of bits, the reception of the next bit will be waited for. The next bit is bit n + 100. Now, a new group of bits is considered, at the end of which bit n = 100 has been added, but from the beginning of which bit n has been dropped. For this new group of N bits, in Fig. 5 designated by 10, a new identification attempt is made. If this attempt does not succeed either, it is possible to proceed with the third group 11, to which bit n + 101 has been added and from which n + 1 has been omitted, etc.

In the situation shown in Fig. 5, bit n corresponds to bit 1 in the code word and bit n + 99 corresponds to bit 100 of the code word. If a change is made from group 9 to group 10, bit n at the beginning is replaced by bit n + 100 at the end. However, in this example, bit n + 100 in the row of received bits corresponds to bit 1 in the code word again. Consequently, the bit added to the rear end of each next group is the same bit from the code word that was dropped from the front end of the group of N bits considered.

This means that if the bit received last, which is hence added to the end of the group of N bits, is identical to the bit dropped at the beginning of that group, the question whether or not the group represents a faultlessly received code word is not influenced. Consequently, if the group of N bits is not faultless, and the bit received last is identical to the bit that is dropped, it is established that the new group of N bits contains one or more incorrectly received bits as well. An attempt to decode this group of N bits makes no sense then. Only if a newly added bit deviates from the bit that is removed, an attempt to decode makes sense.

In this manner, calculation time can be saved, which is particularly important if the decoding algorithm takes up more time than the time available between the reception of two successive bits.

If the calculation time is for instance equal to one and a half times the time between two bits, it is for instance possible to wait, after one group which the receiver has attempted to decode, until two bits have been replaced before considering again whether the two new bits are different from the bits that are replaced (and hence add information), before making a new attempt to decode the new group of bits. However, if the bits were equal, and hence did not add information, another bit may be added, etc., until a bit is added that differs from the bit which it replaces.

For using this technique, the detection section should be provided with comparing means, capable of comparing one or more bits to be removed with one or more bits to be added. For this purpose, a comparator or a (micro)processor may for instance be used.

In this manner, a highly flexible decoding algorithm is formed which, on average, is capable of decoding a code word and thereby identifying a label, much faster than the algorithm of the existing technique described, because for a new decoding attempt it is not necessary to wait until a new series of N bits is received.

This becomes clear in particular if for the algorithm of the invention the distribution of the probability of successful identification is shown. Reference is made to Fig. 6. In Fig. 6, the number of received bits is plotted horizontally, starting from the moment when a label starts functioning as a result of the interrogation field. As long as the number of received bits is smaller than N, F_id(t) = 0. As soon as t = N, the probability of identification is equal to p-word = (1 - BER)^{N}.

As soon as bit N + 1 has been received, F_id(t) increases by a probability of identification as a result of the reception of the bit number (N + 1). Likewise, after reception of the bit number (N + 2), the probability of detection of a faultless row of 100 bits increases. In Fig. 6, this is drawn as curve 12. For comparison, in Fig. 6 the curve 13 is drawn which is a copy of the curve of Fig. 4. Compared with Fig. 4, it is clear that in contrast with the existing technique, the probability of identification between t = N and t = 2N substantially increases when the number of received bits increases.

A further improvement of the recognition can be realized by using the information of several code words. In that case, it is not necessary to wait for an uninterrupted faultless row of bits having the length of the code word. A correct code word may then sometimes be constructed from parts of several incorrect frames. A first method is to compare successive code words bit by bit by means of a suitable comparing means, for instance a microprocessor. When there are not too many differences in these patterns, for instance at two positions, all possible combinations (4 combinations) can be verified by means of, for instance, a checksum calculation, in order to detect the correct code word all the same. Obviously, when the information in the code carrier is coded, a sufficiently large Hamming distance should be taken into account, because spook numbers might otherwise occur.

If more than two frames are used for this, the number of possible code words becomes quite large. As a result, the rate at which the checksum is to be calculated should meet strict requirements. A special processor may be the solution here. Alternatively, when several code words are compared which are not faultless as such, a new code word can be made by averaging over corresponding bits. A so-called majority voting technique is then attractive because of its simplicity.

## Claims

1. An electromagnetic identification system comprising a transceiver which, in operation, generates an interrogation field, and at least one label capable of being activated by means of the interrogation field so as to continuously generate a binary code signal serving at least for identification and having a predetermined length, capable of being detected by the transceiver by means of a detection algorithm, characterized in that the transceiver is provided with a decoder capable of recognizing, within a correctly received bit sequence of the same length as a code signal of a label, a successive series of bits of a predetermined length and composition, serving as synchronization bits, independently of the position of the synchronization bits within the received bit sequence, and of decoding the code signal starting from the position of the synchronization bits.

2. An electromagnetic identification system according to claim 1, characterized by error verification means, which verify, after a received bit sequence having a length of N bits corresponding to the length of a code signal, if the bit sequence has been received correctly, and, if the bit sequence has not been received correctly, carry out a verification again over the last N bits each time a next bit is received until a bit sequence having the length of the code signal has been received faultlessly.

3. An electromagnetic identification system according to claim 2, characterized in that the error verification is only carried out after more than one new bit have been received.

4. An electromagnetic identification system according to claim 2 or 3, characterized by a comparing device which compares during operation one or more starting bits of a first bit sequence which has the length of a code word but contains errors, with a corresponding number of final bits of a later bit sequence having the length of a code word, and activates the error verification means if the bits compared are not equal.

5. An electromagnetic identification system according to any one of the preceding claims, characterized by a device for comparing two or more received code words containing errors, said device, starting from the correspondences between the code words, forming one or more new code words, said new code words being supplied to the error verification means.

6. An electromagnetic identification system according to claim 5, characterized in that said device comprises a processor.

7. An electromagnetic identification system according to claim 5 or 6, characterized in that the device fills in all possible combinations of bits at the positions, different from each other, of the compared code words so as to form the new code words.

8. An electromagnetic identification system according to claim 5 or 6, characterized in that a new code word is formed by means of a majority voting technique.

9. A method for operating an electromagnetic identification system comprising a transceiver which, in operation, generates an interrogation field, and at least one label capable of being activated by means of the interrogation field so as to continuously generate a binary code signal serving at least for identification and having a predetermined length, capable of being detected by the transceiver by means of a detection algorithm, characterized in that a bit sequence detected by the transceiver is registered directly from the first bit, independently of the nature of the first bits, and that a detection algorithm is used capable of recognizing synchronization bits within a bit sequence of a predetermined length of N bits corresponding to the length of a code signal of a label, and of determining the position thereof in the bit sequence, and which determines the position of the other bits in the code signal, starting from the position of the synchronization bits.

10. A method according to claim 9, characterized in that after each new received bit, an error verification is carried out over the last N bits, so that, when bit errors occur, a label code can be detected the first time that a row of bits having the length of the identification code is received faultlessly.

11. A method according to claim 10, characterized in that after two or more received bits, the error verification is repeated, so that a slower calculation can be sufficient.

12. A method according to claim 9, characterized in that the information from several code words is used in order that, in the event of errors in the separate code words, a label can yet be detected.

13. A method according to claim 12, characterized in that two successive code words with errors are compared such that if the two code words differ at few positions, an error verification is carried out for all possible combinations of said differences to obtain a fast identification.

14. A method according to claim 12, characterized in that two or more successive code words with errors are compared and a new code word is formed by means of majority voting over all bits having corresponding positions, while the error verification of said new code word is carried out to quickly obtain a reliable identification.

15. A method according to any one of claims 10-14, characterized in that the error verification comprises a checksum calculation.
